(19) Europäisches Patentamt
European Patent Office
Office européen des brevets

(11) EP 4 464 738 A1

(12) EUROPÄISCHE PATENTANMELDUNG

(43) Veröffentlichungstag:
**20.11.2024 Patentblatt 2024/47**

(21) Anmeldenummer: **24174761.7**

(22) Anmeldetag: **08.05.2024**

(51) Internationale Patentklassifikation (IPC):
***C08J 9/00*** *(2006.01)* ***C08J 9/06*** *(2006.01)*
***C08J 9/14*** *(2006.01)*

(52) Gemeinsame Patentklassifikation (CPC):
**C08J 9/0061; C08J 9/06; C08J 9/141;**
C08J 2203/14; C08J 2361/04

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **19.05.2023 EP 23174207**

(71) Anmelder: **Evonik Operations GmbH**
**45128 Essen (DE)**

(72) Erfinder:
- **Suchan, Michael**
  **45894 Gelsenkirchen (DE)**
- **Otto, Sarah**
  **45128 Essen (DE)**
- **Ferenz, Michael**
  **45147 Essen (DE)**
- **Glos, Martin**
  **46325 Borken (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

# (54) SCHAUMSTABILISATOREN FÜR PHENOLSCHAUM

(57) Zusammensetzung zur Herstellung von Phenolschaum, umfassend mindestens ein Phenolharz, mindestens ein Treibmittel, mindestens einen Katalysator sowie mindestens ein Polyethersiloxan nach Formel 1, $M_aM_b^1D_cD_d^1$.

EP 4 464 738 A1

**Beschreibung**

Die vorliegende Erfindung liegt auf dem Gebiet der Phenolschäume. Insbesondere betrifft sie eine Zusammensetzung zur Herstellung von Phenolschaum, Verfahren zur Herstellung von Phenolschaum, erfindungsgemäß hergestellten Phenolschaum sowie dessen Verwendung. Unter Phenolschaum wird im Rahmen der vorliegenden Erfindung insbesondere ein Schaumstoff erhältlich durch Reaktion eines Phenolharzes mit einer Säure als Katalysator unter Zusatz eines Treibmittels und eines Schaumstabilisators verstanden. Phenolschäume sind dem Fachmann bekannt und beispielsweise in EP 3830174 A1, DE 602004006376 T2, EP 2898005 A1, EP 1922357 A1, WO 2022043561 A1, EP 4073155 A1, AU 2021238847 A1 oder WO 2006114777 A1 beschrieben. Phenolschäume werden auch als Phenolharzschäume bezeichnet. Das gilt auch für diese Erfindung.

Bei der Herstellung von Phenolschaum können in der Regel zellstabilisierende bzw. schaumstabilisierende Additive eingesetzt werden, welche für eine feinzellige, gleichmäßige und störungsarme Schaumstruktur sorgen sollen und damit die Gebrauchseigenschaften, insbesondere zum Beispiel das thermische Isolationsvermögen des Schaumes im wesentlichen Maße positiv beeinflussen. Gewöhnlich können hierfür Schaumstabilisatoren eingesetzt werden, wie z.B. Schaumstabilisatoren auf Basis ethoxylierter Pflanzenöle, wie z.B. Rizinusöl, wie z.B. in EP 3830174 A1 beschrieben. Als besonders effektiv hat sich der Einsatz von Polyether-modifizierten Siloxanen (PES), wie z.B. in WO 2022043561 A1 beschrieben, herausgestellt, um die Gebrauchseigenschaften weiter zu verbessern. Insbesondere die Kombination aus ethoxylierten Pflanzenölen und Polyether-modifizierten Siloxanen führt zu hervorragenden Gebrauchseigenschaften. Diese Kombination stellt daher einen bei der Herstellung von Phenolschaum üblicherweise bevorzugten Typ der Schaumstabilisatoren dar.

WO 2004/056911 A2 beschreibt unter anderem die Herstellung geschlossenzelliger Phenolschäume unter Verwendung von Polyethersiloxan-Copolymeren als Schaumstabilisatoren zur Verbesserung der Alterung der Wärmeleitfähigkeit, wobei diese unter Verwendung des allgemeinen Polysiloxan-, Polyethylenoxid- und Polypropylenoxid-Gehaltes beschrieben sind.

WO 2022/043561 A1 beschreibt unter anderem die Herstellung von Phenolschäumen unter Verwendung von Schaumstabilisatoren basierend auf einer Mischung aus ethoxyliertem Rizinusöl und Polyethersiloxan-Copolymeren mit weniger als 50% Polyethylenoxid-Gehalt, wobei bevorzugt solche Polyethersiloxan-Copolymere eingesetzt werden, welche eine Molekulargewicht von 9.500 bis 25.000 g/mol und einen HLB Wert zwischen 9 und 13 aufweisen.

Der Einfluss der Schaumstabilisatoren und deren Struktur auf die Emissionen des Schaumes und Wege diese zu verringern bzw. zu vermeiden sind bisher nicht beschrieben.

Der Einsatz Polyether-modifizierter Siloxane als Schaumstabilisatoren in Gegenwart von Säuren als Katalysator kann zu einem Abbau der Polyether-modifizierten Siloxane und einer daraus folgenden Bildung zyklischer Siloxane, vorzugsweise Octamethylcyclotetrasiloxan (D4), Decamethylcyclopentasiloxan (D5) und Dodecamethylcyclohexasiloxan (D6), insbesondere D4 und D5, führen, welche sich negativ auf die Eigenschaften, insbesondere die Emissionen des Phenolschaums auswirken.

Vor diesem Hintergrund war die Aufgabe der vorliegenden Erfindung die Bereitstellung von Phenolschäumen, die über gleichartige Gebrauchseigenschaften, insbesondere thermische Isolationseigenschaften, wie die mit herkömmlichen Polyether-modifizierten Siloxanen hergestellten Phenolschäume verfügen, aber hinsichtlich der Emissionen im Zusammenhang mit der Bildung zyklischer Siloxane, keine oder eine geringere Bildung von D4, D5 und/oder D6, insbesondere D4 und/oder D5, aufweisen.

Die Aufgabe wird gelöst vom Gegenstand der Erfindung. Der Gegenstand der Erfindung ist eine Zusammensetzung zur Herstellung von Phenolschaum, umfassend mindestens ein Phenolharz, mindestens ein Treibmittel, mindestens einen Katalysator sowie mindestens ein Polyethersiloxan nach Formel 1,

$$M_aM^1_bD_cD^1_d \qquad \text{(Formel 1)}$$

mit

M =

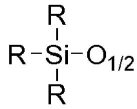

$M^1$ =

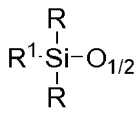

D =

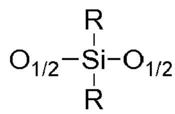

$D^1$ =

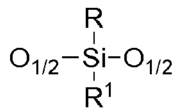

a = 0 bis 2,
b = 0 bis 2,
c = 0 bis 100, vorzugsweise 0 bis 75, besonders bevorzugt 0 bis 50,
d = 1 bis 100, vorzugsweise 1 bis 75, besonders bevorzugt 1 bis 50,
wobei

$$a + b = 2,$$

$$a + b + c + d > 4, \text{ bevorzugt } > 7,$$

$$(a + b + c + d) / (b + d) < 5,$$

vorzugsweise 1 bis 4, besonders bevorzugt 1 bis 3,
R = jeweils unabhängig voneinander, gleiche oder verschiedene Alkylreste mit 1 bis 16 Kohlenstoffatomen, gleiche oder verschiedene Arylreste mit 6 bis 16 Kohlenstoffatomen, H oder -O-$R^2$, bevorzugt Methyl, Ethyl, Phenyl oder H, insbesondere Methyl,
$R^2$ = jeweils unabhängig voneinander gleiche oder verschiedene Alkylreste mit 1 bis 16 Kohlenstoffatomen, gleiche oder verschiedene Arylreste mit 6 bis 16 Kohlenstoffatomen oder
H,
$R^1$ = jeweils unabhängig voneinander gleiche oder verschiedene Alkylreste mit 6 bis 18 Kohlenstoffatomen oder gleiche oder verschiedene Polyether-Reste, bevorzugt gleiche oder verschiedene Alkylreste mit 6 bis 18 Kohlenstoffatomen oder gleiche oder verschiedene Polyether-Reste nach Formel 2,

$$-R^3-O-[CH_2CH_2O]_e-[CH_2CH(CH_3)O]_f-[CH(CH_3)CH_2O]_g-[CR^4{}_2CR^4{}_2O]_h-R^5 \quad \text{(Formel 2)}$$

$R^3$ = jeweils unabhängig voneinander gleiche oder verschiedene divalente Alkylreste mit 2 bis 15 Kohlenstoffatomen, bevorzugt gleiche oder verschiedene divalente Alkylreste mit 3 bis 6 Kohlenstoffatomen, insbesondere bevorzugt $-(CH_2)_3-$,
$R^4$ = jeweils unabhängig voneinander gleiche oder verschiedene Alkylreste mit 1 bis 18 Kohlenstoffatomen, die optional Etherfunktionen besitzen, oder gleiche oder verschiedene Arylreste mit 6 bis 18 Kohlenstoffatomen, die optional Etherfunktionen besitzen, oder H, bevorzugt H, Methyl, Ethyl oder Benzyl,
$R^5$ = jeweils unabhängig voneinander gleiche oder verschiedene Reste ausgewählt aus der Gruppe bestehend aus: $R^2$ und C(O)$R^2$, wobei Methyl, Butyl, H oder C(O)Me bevorzugt sind, e = 0 bis 100, bevorzugt 0 bis 80, insbesondere

0 bis 60,
f = 0 bis 100, bevorzugt 0 bis 80, insbesondere 0 bis 60,
g = 0 bis 100, bevorzugt 0 bis 80, insbesondere 0 bis 60,
h= 0 bis 100, bevorzugt 0 bis 60, besonders bevorzugt 0,
wobei mindestens einer der Werte e, f, g oder h > 0 ist,
wobei höchstens 50% der Reste $R^1$ in einem Polyethersiloxan nach Formel 1, jeweils unabhängig voneinander gleiche oder verschiedene Alkylreste mit 6 bis 18 Kohlenstoffatomen sind und wobei das mindestens eine Polyethersiloxan nach Formel 1 in einer Gesamtmenge von 0,1 bis 20 Gewichtsteile, vorzugsweise 0,5 bis 10 Gewichtsteile, besonders bevorzugt 0,5 bis 8 Gewichtsteile bezogen auf 100 Gewichtsteile des gesamt eingesetzten Phenolharzes, enthalten ist.

Der erfindungsgemäße Gegenstand geht mit vielfältigen Vorteilen einher. So ermöglicht er die Bereitstellung von Phenolschäumen, welche die bekannten Anforderungen erfüllen. Insbesondere verfügen die Phenolschäume über sehr gute Isolationseigenschaften und weisen ein hervorragendes Langzeitverhalten sowie eine hohe Oberflächenqualität auf. Vorteilhafterweise wird dies ermöglicht, ohne die sonstigen Eigenschaften des Materials zu beeinträchtigen und ohne oder mit nur geringer Bildung zyklischer Siloxane, vorzugsweise D4, D5 und/oder D6, insbesondere D4 und/oder D5. Es werden überdies besonders feinzellige, gleichmäßige und störungsarme Schaumstrukturen ermöglicht. Die Erfindung erlaubt ebenfalls den gemeinsamen Einsatz mit den aus dem Stand der Technik bekannten alkoxylierten Pflanzenölen.

Die erfindungsgemäße Zusammensetzung umfasst mindestens ein Polyethersiloxan nach Formel 1. Im Sinne der Erfindung besonders bevorzugt einsetzbare Polyethersiloxane werden in den drei folgenden bevorzugten Ausführungsformen der Erfindung beschrieben.

Wenn die erfindungsgemäße Zusammensetzung sich dadurch auszeichnet, dass das mindestens eine Polyethersiloxan nach Formel 1 für $R^1$ mindestens einen Polyether-Rest der allgemeinen Formel 2 enthält, mit

e = 6 bis 16,
f = g = h = 0
oder

$$e + f + g = 8 \text{ bis } 50,$$

h = 0,

$$(f + g) / (e + f + g) > 0$$

bis 0,9, besonders bevorzugt 0,1 bis 0,6,

so liegt eine besonders bevorzugte Ausführungsform der Erfindung vor.

Wenn die erfindungsgemäße Zusammensetzung sich dadurch auszeichnet, dass das mindestens eine Polyethersiloxan nach Formel 1 für $R^1$ mindestens zwei verschiedene Polyether-Reste der allgemeinen Formel 2 enthält, wobei mindestens ein Polyether der Kategorie 1 und mindestens ein Polyether der Kategorie 2 entspricht, mit

a = 0 bis 2, besonders bevorzugt 2
b = 0 bis 2, besonders bevorzugt 0,
c = 0 bis 10, bevorzugt 0 bis 5, besonders bevorzugt 0
d = 1 bis 80, vorzugsweise 1 bis 50, besonders bevorzugt 5 bis 40,
wobei

$$a + b = 2,$$

$$a + b + c + d > 4, \text{ bevorzugt } > 7$$

und
Kategorie 1:

$$e + f + g = 10 \text{ bis } 60,$$

besonders bevorzugt 14 bis 40,
h = 0,

$$(f + g) / (e + f + g) \geq 0,6,$$

besonders bevorzugt ≥ 0,8, insbesondere gleich 1,
und
Kategorie 2:

e = 6 bis 16,
f = g = h = 0,

oder

$$e + f + g = 8 \text{ bis } 50,$$

h = 0,

$$(f + g) / (e + f + g) > 0 \text{ bis } 0,5,$$

besonders bevorzugt 0,1 bis 0,3
und das bevorzugte Verhältnis aus Polyethern der Kategorie 1 und Polyethern der Kategorie 2 im betreffenden Polyethersiloxan 10:90 bis 90:10 Gew.-%, besonders bevorzugt 20:80 bis 80:20 Gew.-%, insbesondere 25:75 bis 75:25 Gew.-% entspricht,

so liegt eine weitere besonders bevorzugte Ausführungsform der Erfindung vor.

Es entspricht einer weiteren besonders bevorzugten Ausführungsform der Erfindung, wenn die erfindungsgemäße Zusammensetzung sich dadurch auszeichnet, dass das mindestens eine Polyethersiloxan nach Formel 1 sich dadurch auszeichnet, dass es mindestens zwei verschiedene Reste $R^1$ enthält, wobei mindestens ein Rest $R^1$ ein Polyether-Rest nach Formel 2 und ein Rest $R^1$ ein Alkylrest mit 6 bis 18 Kohlenstoffatomen ist, wobei höchstens 50% der Reste $R^1$ in einem Polyethersiloxan nach Formel 1, Alkylreste mit 6 bis 18 Kohlenstoffatomen sind.

Die erfindungsgemäße Zusammensetzung umfasst mindestens ein Treibmittel. Wenn das mindestens eine Treibmittel ausgewählt ist, aus der Gruppe bestehend aus

- Kohlenwasserstoffen mit 3, 4 oder 5 Kohlenstoff-Atomen, bevorzugt cyclo-, iso- und/oder n-Pentan
  und
- halogenierten Kohlenwasserstoffen mit 3, 4 oder 5 Kohlenstoff-Atomen, bevorzugt Isopropylchlorid, Hydrofluoroolefine und/oder Hydrohaloolefine, bevorzugt 1234ze, 1234yf, 1224yd, 1233zd(E) und/oder 1336mzz,

so liegt eine weitere besonders bevorzugte Ausführungsform der Erfindung vor.

Vorzugsweise kann die erfindungsgemäße Zusammensetzung zusätzlich mindestens ein siliziumfreies Tensid enthalten. Es entspricht einer besonders bevorzugten Ausführungsform der Erfindung, wenn in der erfindungsgemäßen Zusammensetzung zusätzlich mindestens ein siliziumfreies Tensid in einer Gesamtmenge von 0,1 bis 15 Gewichtsteile, vorzugsweise 1 bis 10 Gewichtsteile, bezogen auf 100 Gewichtsteile des gesamt eingesetzten Phenolharzes, enthalten ist.

Vorzugsweise kann die erfindungsgemäße Zusammensetzung zusätzlich mindestens ein alkoxyliertes, bevorzugt ethoxyliertes, Pflanzenöl, bevorzugt Rizinusöl enthalten. Es entspricht einer besonders bevorzugten Ausführungsform der Erfindung, wenn in der erfindungsgemäßen Zusammensetzung zusätzlich mindestens ein alkoxyliertes, bevorzugt ethoxyliertes, Pflanzenöl, bevorzugt Rizinusöl in einer Gesamtmenge von 0,1 bis 15 Gewichtsteile, vorzugsweise 1 bis 10 Gewichtsteile, bezogen auf 100 Gewichtsteile des gesamt eingesetzten Phenolharzes, enthalten ist.

Die erfindungsgemäße Zusammensetzung umfasst mindestens eine Katalysator. Es entspricht einer weiteren besonders bevorzugten Ausführungsform der Erfindung, wenn der mindestens eine Katalysator ausgewählt ist aus der

Gruppe bestehend aus organischen und anorganischen Säuren, vorzugsweise ist der mindestens eine Katalysator ausgewählt aus der Gruppe bestehend aus Schwefelsäure, Phosphorsäure, Benzolsulfonsäure, Xylolsulfonsäure, para-Toluolsulfonsäure, Ethylbenzolsulfonsäure, Naphtolsulfonsäure, Cumolsulfonsäure und Phenolsulfonsäure.

Weiterhin entspricht es einer besonders bevorzugten Ausführungsform der Erfindung, wenn der mindestens eine Katalysator in einer Gesamtmenge von 1 bis 30 Gewichtsteile, vorzugsweise 1 bis 25 Gewichtsteile, besonders bevorzugt 3 bis 20 Gewichtsteile, bezogen auf 100 Gewichtsteile des gesamt eingesetzten Phenolharzes, enthalten ist.

Die erfindungsgemäße Zusammensetzung umfasst mindestens ein Phenolharz. Wenn das mindestens eine Phenolharz einen Wassergehalt von 1 bis 25 Gew.-%, bevorzugt 4 bis 19 Gew.-%, bezogen auf das gesamt eingesetzte Phenolharz, aufweist, so liegt eine weitere besonders bevorzugte Ausführungsform der Erfindung vor.

Eine besonders bevorzugte Phenolschaum-Formulierung im Sinne dieser Erfindung ergibt ein Raumgewicht von 5 bis 900 $kg/m^3$ und hat vorzugweise die in Tabelle 1 genannte Zusammensetzung, die einer bevorzugten Ausführungsform der Erfindung entspricht:

Tabelle 1: Zusammensetzung einer bevorzugten Phenolschaumformulierung

| **Komponente** | **Gewichtsteile** |
|---|---|
| Phenolharz | 80 bis 120 |
| Treibmittel | >0 bis 50 |
| Katalysator | 1 bis 30 |
| Schaumstabilisator (erfindungsgemäßes Polyethersiloxan nach Formel 1) | >0 bis 15 |
| Optional weitere Additive (Flammschutzmittel etc.) | 0 bis 100 |

Ein weiterer Gegenstand der vorliegenden Erfindung ist ein Verfahren zur Herstellung von Phenolschaum, welches unter Einsatz einer Reaktionsmischung, enthaltend eine erfindungsgemäße Zusammensetzung wie zuvor beschrieben, insbesondere wie in einem der Ansprüche 1 bis 10 definiert, erfolgt.

Für weitere bevorzugte Ausführungsformen und Ausgestaltungen des erfindungsgemäßen Verfahrens sei außerdem auf die zuvor bereits im Zusammenhang mit der erfindungsgemäßen Zusammensetzung gemachten Ausführungen verwiesen.

Ein weiterer Gegenstand der vorliegenden Erfindung ist ein Phenolschaum, hergestellt gemäß des zuvor genannten erfindungsgemäßen Verfahrens, vorzugsweise unter Einsatz einer erfindungsgemäßen Zusammensetzung, insbesondere wie in einem der Ansprüche 1 bis 10 definiert.

Ein besonders bevorzugter Phenolschaum liegt vor, wenn der Phenolschaum eine Dichte nach ASTM D1622-2020 von 5 bis 500 $kg/m^3$, bevorzugt 10 bis 200 $kg/m^3$, insbesondere bevorzugt von 12 bis 100 $kg/m^3$ aufweist. Dies entspricht einer besonders bevorzugten Ausführungsform der Erfindung.

Ein weiterer Gegenstand der Erfindung ist die Verwendung des erfindungsgemäßen Phenolschaums zur thermischen Isolation.

Nachfolgend werden besonders bevorzugte erfindungsgemäße Zusammensetzungen genauer beschrieben.

Eine besonders bevorzugte erfindungsgemäße Zusammensetzung enthält die folgenden Bestandteile:

- mindestens ein Phenolharz,
- mindestens ein Treibmittel,
- mindestens ein Katalysator,
- mindestens ein Polyethersiloxan nach Formel 1 als Schaumstabilisator
- optional weitere Additive, etc.

Die Herstellung von Phenolschäumen (diese werden synonym auch als Phenolharzschäume bezeichnet) ist an sich bekannt. Für die Herstellung von Phenolschäumen werden ein oder mehrere Phenolharze, vorzugsweise ein oder mehrere sogenannte Resolharze, verwendet. Entsprechend einsetzbare Phenolharze, vorzugsweise Resolharze, sind an sich bekannt. Insbesondere können sie in bekannter Weise durch Kondensation von Phenol oder einer phenolbasierten Verbindung wie zum Beispiel Kresol, Xylenol, para-Alkylphenol, para-Phenylphenol, Resorcin oder dergleichen und einem Aldehyd wie zum Beispiel Formaldehyd, Furfural, Acetaldehyd oder dergleichen unter vorzugsweise basischen Bedingungen, zum Beispiel durch Einsatz einer katalytische Menge an Alkalihydroxiden, wie z.B. Natriumhydroxid, Kaliumhydroxid oder Calciumhydroxid oder einem aliphatischen Amin, wie z.B. Trimethylamin oder Triethylamin, bevorzugt mit einem Überschuss an Aldehyd hergestellt werden. Dies stellt den üblichen Weg zur Herstellung von Phenolharzen, vorzugsweise Resolharzen dar, wobei die Erfindung nicht nur auf die gerade zuvor aufgeführten Chemikalien beschränkt ist.

Das molare Verhältnis von Phenolgruppen zu Aldehydgruppen unterliegt dabei keiner Beschränkung. Bevorzugt

liegt das Verhältnis in einem Bereich von 1:1 bis 1:3, besonders bevorzugt in einem Bereich von 1:1,5 bis 1:2,5. Vorzugsweise, aber nicht beschränkt darauf, hat das Phenolharz einen freien Aldehydgehalt von 0,1 Gew.-% bis 0,5 Gew.-%. Dieser kann mittels potentiometrischer Titration nach ISO 11402:2004 mit Hydroxylaminhydrochlorid bestimmt werden.

Bevorzugt einsetzbare Phenolharze, die bei der Schaumherstellung verwendet werden können, sind bei 25 °C und Normaldruck Flüssigkeiten, und zwar vorzugsweise mit Wasserkonzentrationen von etwa 1 bis 25 Gew.-%, bevorzugt 5 bis 20 Gew.-%, und verfügen über Methylolgruppen als reaktive Substituenten, wie beispielsweise in EP 0170357 B1 beschrieben. Sofern gewünscht, kann die Viskosität des Phenolharzes unter anderem durch den Wassergehalt eingestellt werden. So führen hohe Wassergehalte gewöhnlich zu einer niedrigeren Viskosität und erleichtern so sowohl die Handhabung des Harzes als auch das Mischen währen der Schaumherstellung.

Die Viskosität bevorzugt einsetzbarer Phenolharze bei 25 °C und Normaldruck liegt vorzugsweise in einem Bereich von 1000 bis 28000 mPa*s und kann durch die üblichen dem Fachmann bekannten Methoden wie z.B. mittels Brookfield Viskosimeter bestimmt werden. Grundsätzliches zur Herstellung und Zusammensetzung von Phenolharzen ist dem Stand der Technik entnehmbar und insbesondere z.B. in EP 3830174 A1, EP 2898005 A1, WO 2022043561 A1 oder EP 4073155 A1, beschrieben.

Treibmittel und deren Einsatz bei der Herstellung von Phenolschäumen sind dem Fachmann bekannt. Die Verwendung von einem oder mehreren Treibmitteln ist grundsätzlich abhängig von der Art des Systems und der Anwendung des erhaltenen Phenolschaums. Je nach Menge des verwendeten Treibmittels kann ein Schaum mit hoher oder niedriger Dichte hergestellt werden. So können Schäume mit Dichten von vorzugsweise 5 $kg/m^3$ bis 900 $kg/m^3$, bevorzugt 5 bis 500 $kg/m^3$, besonders bevorzugt 10 bis 200 $kg/m^3$, insbesondere 12 bis 100 $kg/m^3$ nach ASTM D1622-20 hergestellt werden.

Besonders bevorzugt einsetzbare Treibmittel wurden oben bereits beschrieben. Als mögliche Treibmittel können eine oder mehrere der entsprechenden Verbindungen mit passenden Siedepunkten, wie z.B. Kohlenwasserstoffe mit 3, 4 oder 5 Kohlenstoffatomen, bevorzugt cyclo-, iso- oder n-Pentan, halogenierte Kohlenwasserstoffe wie zum Beispiel chlorierte Kohlenwasserstoffe wie Dichlorethan, 1,2-Dichlorethen, n-Propylchlorid, Isopropylchlorid, Butylchlorid, Isobutylchlorid, Pentylchlorid, Isopentylchlorid, 1,1-Dichlorethen, Trichlorethen oder Chlorethen oder Fluorkohlenwasserstoffe (HFC), wie zum Beispiel HFC 245fa, HFC 134a oder HFC 365mfc, Hydrofluoroolefine (HFO) oder Hydrohaloolefine, bevorzugt 1234ze, 1234yf, 1224yd, 1233zd(E) oder 1336mzz sowie deren Mischungen eingesetzt werden.

Besonders bevorzugt einsetzbare Katalysatoren wurden oben bereits beschrieben. Katalysatoren, die für die Herstellung von Phenolschäumen einsetzbar sind, sind dem Fachmann aus dem Stand der Technik bekannt und beispielsweise in EP 0170 357 A1 oder in DE 602004006376 T2 beschrieben. Hierbei kann vorzugsweise auf die üblichen aus dem Stand der Technik bekannten organischen und anorganischen Säuren zurückgegriffen werden. Es können eine oder mehrere Säuren eingesetzt werden. Besonders bevorzugt einsetzbar sind Schwefelsäure, Phosphorsäure, Benzolsulfonsäure, Xylolsulfonsäure, para-Toluolsulfonsäure, Ethylbenzolsulfonsäure, Naphtolsulfonsäure, Cumolsulfonsäure und/oder Phenolsulfonsäure. Insbesondere können als Katalysatoren Gemische mehrerer dieser Verbindungen eingesetzt werden. Die bevorzugte Einsatzmenge der Katalysatoren für eine vollständige Reaktion wird unter anderem durch den Wassergehalt des Phenolharzes und/oder wenn der Katalysator als wässrige Lösung vorliegt auch durch dessen Wassergehalt beeinflusst. Beispielsweise kann bei höherem Wassergehalt eine höhere Säurekonzentration erforderlich sein.

Phenolschaum kann auf bekannte Weise, also insbesondere durch Reaktion einer Mischung umfassend Phenolharz, Treibmittel, Schaumstabilisator und Katalysator gebildet werden. Bei Zugabe eines Katalysators zu einem Gemisch aus Phenolharz, Treibmittel und Schaumstabilisator kommt es zu einer exothermen Reaktion zwischen den Methylolgruppen und Phenol, was zur Bildung von Methylenbrücken und zur Vernetzung führt. Dabei wird durch die Kondensation Wasser freigesetzt. Die Art und Menge der eingesetzten Säure, die Eigenschaften des Treibmittels und die Struktur des Schaumstabilisators beeinflussen dabei die Exothermie der Reaktion und die Schaumbildung.

Schaumstabilisatoren und deren Einsatz bei der Herstellung von Phenolschäumen sind dem Fachmann, wie oben beschrieben, allgemein bekannt. Erfindungsgemäß wird mindestens ein Polyethersiloxan nach Formel 1 eingesetzt. Das mindestens eine Polyethersiloxan nach Formel 1 fungiert als Schaumstabilisator. Daneben können auch zusätzliche Schaumstabilisatoren eingesetzt werden, die die Schaumherstellung unterstützen. Diese Verbindungen sind aus dem Stand der Technik hinreichend bekannt. So wird beispielsweise in EP 3830174 A1 der Einsatz von ethoxyliertem Rizinusöl beschrieben.

Als optionale Additive können eine oder mehrere der nach dem Stand der Technik bekannten Substanzen verwendet werden, die bei der Herstellung von Phenolschäumen üblicherweise Verwendung finden, wie zum Beispiel Viskositätserniedriger, Weichmacher, Härter, Flammschutzmittel, zellverfeinernde Additive, Füllstoffe, Farbstoffe, Pigmente und/oder Duftstoffe. Geeignete optionale Additive sind zum Beispiel in EP 3830174 A1, US 4444912 A sowie EP 1922357 A1 beschrieben.

Als optionale feste Füllstoffe können zum Beispiel Metallhydroxide, wie Aluminiumhydroxid, Magnesiumhydroxid, Metallcarbonate, wie Calciumcarbonat, Magensiumcarbonat, Bariumcarbonat oder Zinkcarbonat, Metalloxide, wie

Aluminiumoxid oder Zinkoxid oder Metallpulver, wie Zink verwendet werden. Zur Verringerung der Viskosität des Phenolharzes können zum Beispiel Monoethylenglykol oder Polyesterpolyole optional eingesetzt werden. Als optionale Härter können zum Beispiel Verbindungen mit Aminogruppen wie Harnstoff oder Dicyandiamid eingesetzt werden. Vorzugsweise wird Harnstoff eingesetzt. Diese können bei der Verschäumung als auch bereits bei der Herstellung des Phenolharzes eingesetzt werden.

Das erfindungsgemäße Verfahren zur Herstellung von Phenolschäumen kann nach allen bekannten Methoden durchgeführt werden. Diese sind dem Fachmann bekannt und z.B. in EP 3830174 A1 beschrieben.

Wenn aus dieser Beschreibung nichts anderes hervorgeht, dann kann jegliche bevorzugte oder besonders bevorzugte Ausführungsform der Erfindung mit einer oder mehreren der übrigen bevorzugten oder besonders bevorzugten Ausführungsformen der Erfindung kombiniert werden.

Die erfindungsgemäßen Gegenstände sind nachfolgend beispielhaft beschrieben, ohne dass die Erfindung, deren Anwendungsbreite sich aus der gesamten Beschreibung und den Ansprüchen ergibt, auf diese beispielhaften Ausführungsformen beschränkt sein soll. Sind Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Werden Mittelwerte angegeben, so handelt es sich, wenn nicht anders angegeben, um Zahlenmittel. Werden Parameter angegeben, die durch Messung bestimmt wurden, so wurden die Messungen, wenn nicht anders angegeben, bei einer Temperatur von 23 °C und Normaldruck ( 1 atm = 101325 Pa ) durchgeführt.

**Beispiele:**

Synthese der Polyethersiloxan-Schaumstabilisatoren (PES) (= Polyethersiloxane nach Formel 1 und Vergleichsbeispiele)

Als Pt-Katalysator zur Herstellung der Polyethersiloxane wurde eine xylolische Lösung des Karstedt-Katalysators (Platinum(0)-1,3-divinyl-1,1,3,3-tetramethyldisiloxan Komplex (CAS 68478-92-2)) verwendet. Der Pt-Gehalt der Lösung betrug 2 Gew.-%. Der Katalysator wurde von Merck bezogen und ohne weitere Aufarbeitung eingesetzt.

Zur Synthese der Polyethersiloxane wurden Allylpolyether bzw. Allylkohlenwasserstoffe entsprechend der in Tabelle 2 angegebenen Zusammensetzung und 10 ppm Pt bezogen auf die Gesamteinwaage in Form des oben beschriebenen Pt-Katalysators in einem Dreihalskolben mit KPG-Rührer und Rückflusskühler vorgelegt. Die Apparatur wurde mit Stickstoff inertisiert und die Mischung wurde auf 80 °C erhitzt. Anschließend wurde SiH-funktionelles Siloxan entsprechend der in Tabelle 2 angegebenen Zusammensetzung zudosiert. Das Verhältnis von Allylpolyether bzw. Allylkohlenwasserstoff und SiH-funktionellem Siloxan wurde so gewählt, dass pro mol SiH-Funktionen 1,4 mol Doppelbindungen aus dem Allylpolyether bzw. Allylkohlenwasserstoff vorlagen. Eine exotherme Reaktion setzte ein. Durch Kühlung wurde die Temperatur unter 110 °C gehalten. Anschließend wurde das Reaktionsgemisch 3 h bei 100 °C gerührt. Es wurden stets klare bis leicht trübe Produkte erhalten.

Es wurden die in Tabelle 2 entsprechend Formel 1 und Formel 2 dargestellten Polyethersiloxane hergestellt und anwendungstechnisch untersucht. Für PES 1 bis 14 gilt R = Methyl, $R^3$ = $-(CH_2)_3-$ und h = 0. PES 1 bis 3 gelten als nicht-erfinderische Vergleichsbeispiele.

Tabelle 2: Zusammensetzung der Polyethersiloxan-Schaumstabilisatoren (PES)

| PES | a | b | c | d | Polyether 1 | | | Polyether 2 | | | Verhältnis Polyether 1 / Polyether 2 |
|---|---|---|---|---|---|---|---|---|---|---|---|
| | | | | | e | f+g | $R^5$ | e | f+g | $R^5$ | |
| PES 1 | 2 | 0 | 58 | 8 | 11 | 3,5 | -H | - | - | - | - |
| PES 2 | 2 | 0 | 18 | 2 | 11 | 9 | -H | - | - | - | - |
| PES 3 | 2 | 0 | 30 | 6 | 11 | 3,5 | -H | 18 | 5 | -H | 30/70 |
| PES 4 | 2 | 0 | 28 | 10 | 12 | 0 | -H | 22 | 10 | -H | 40/60 |
| PES 5 | 2 | 0 | 9 | 4 | 12 | 0 | -H | - | - | - | - |
| PES 6 | 2 | 0 | 7 | 8 | 14 | 17 | -H | 11 | 9 | -H | 50/50 |

(fortgesetzt)

| PES | a | b | c | d | Polyether 1 | | | Polyether 2 | | | Verhältnis Polyether 1 / Polyether 2 |
|---|---|---|---|---|---|---|---|---|---|---|---|
| | | | | | e | f+g | $R^5$ | e | f+g | $R^5$ | |
| PES 7 | 0 | 2 | 49 | 17 | 11 | 3,5 | -H | - | - | - | - |
| PES 8 | 0 | 2 | 32 | 16 | 11 | 9 | $-CH_3$ | 11 | 1,5 | -H | 20/80 |
| PES 9 | 2 | 0 | 0 | 12 | 0 | 25 | -H | 15 | 3 | -H | 50/50 |
| PES 10 | 2 | 0 | 0 | 12 | 0 | 25 | -H | 20 | 4,5 | -H | 65/35 |
| PES 11 | 2 | 0 | 0 | 21 | 0 | 25 | -H | 20 | 4,5 | -H | 50/50 |
| PES 12 | 2 | 0 | 0 | 6 | 0 | 25 | -H | 12 | 0 | -H | 75/25 |
| PES 13 | 2 | 0 | 0 | 38 | 0 | 15 | $-CH_3$ | 12 | 0 | -H | 60/40 |
| PES 14 | 2 | 0 | 0 | 12 | 0 | 25 | -H | 26 | 7 | -H | * |
| * Für PES 14 gilt für $R^1$: 50% Polyether 1, 25% Polyether 2 und 25% ein Hexadecylrest. | | | | | | | | | | | |

**Herstellung des Phenolschaums**

Für den anwendungstechnischen Vergleich wurde die in Tabelle 3 dargestellte Formulierung verwendet. Die Durchführung der Vergleichsverschäumungen erfolgte im Handmischverfahren. Dazu wurden Phenolharz (Ansatzmenge 180 ± 5 g) und Schaumstabilisator in einen Becher eingewogen und mit einem Tellerrührer (6 cm Durchmesser) 15 min bei 20 °C und 500 rpm vermischt. Danach wurde das Treibmittel zugegeben, für 30 s bei 1500 rpm vermischt und anschließend auf 18 °C gekühlt. Anschließend wurde die Säure zugegeben, die Mischung bei 2000 rpm für 45 s verrührt und in eine auf 50 °C thermostatisierte Aluminiumform von 25 cm x 25 cm x 7 cm Größe überführt, welche mit Polyethylenfolie ausgekleidet war. Nach 1 h wurden die Schaumstoffe entformt und 18 h in einem auf 60 °C beheizten Ofen ausgehärtet.

Die Porenstruktur wurde subjektiv anhand einer Skala von 1 bis 10 beurteilt, wobei 10 einen (idealisierten) ungestörten, sehr feinen Schaum und 1 einen extrem stark gestörten, groben Schaum repräsentiert. Die Wärmeleitzahl ($\lambda$-Wert in mW/m K) wurde an 2,5 cm dicken Scheiben mit einem Gerät vom Typ Hesto Lambda Control, Modell HLC X206 bei einer mittleren Temperatur von 10°C entsprechend den Vorgaben der Norm EN12667:2001 gemessen. Die Dichte wurde entsprechend ASTM D1622-20 bestimmt. Die Summe der Emission der Zyklen D4 und D5 wurde an 7x7x7 cm großen Probekörpern im Prüfkammerverfahren nach DIN EN ISO 16000-9:2006 mit Beprobung nach 24 h und Auswertung nach DIN ISO 16000-6:2022 als Toluolequivalente gemessen.

Die erfindungsgemäßen Polyethersiloxan-Schaumstabilisatoren wurden sowohl einzeln als auch in Kombination mit einem alkoxylierten Rizinusöl untersucht. Hierzu wurde TAGAT® CH 40 als ethoxyliertes Rizinusöl der Firma Evonik Operations GmbH verwendet. Die Ergebnisse sind in Tabelle 3 und 4 dargestellt.

Tabelle 3: Formulierung zur Herstellung von Phenolschaum

| Komponente | Gewichtsteile |
|---|---|
| Phenolharz* | 100 |
| Schaumstabilisator | 4,5 |
| Cyclo- / Isopentan 85/15 | 10 |
| p-Toluolsulfonsäure 65 Gew.-% in Wasser | 18 |
| * Phenolharz Cellobond J6014L der Firma Bakelite | |

Tabelle 3: Eigenschaften der Phenolschäume

| **Schaumstabilisator** | **Dichte in kg/m³** | **λ in mW/mK** | **Zellstruktur Oberfläche** | **Zellstruktur Innenstörung** | **Emission D4+D5 in μg/m³** |
|---|---|---|---|---|---|
| PES 1 | 38,9 | 24,1 | 5,5 | 6,0 | > 600 |
| PES 2 | 37,6 | 23,7 | 5,5 | 5,0 | > 600 |
| PES 3 | 35,4 | 22,2 | 7,0 | 7,0 | > 600 |
| PES 4 | 35,2 | 22,1 | 7,5 | 7,0 | < 400 |
| PES 5 | 35,9 | 22,5 | 7,0 | 6,5 | < 400 |
| PES 6 | 34,7 | 22,4 | 7,0 | 7,0 | < 400 |
| PES 7 | 34,1 | 21,9 | 6,5 | 6,5 | < 400 |
| PES 8 | 36,1 | 22,4 | 6,5 | 7,0 | < 400 |
| PES 9 | 35,2 | 22,0 | 7,0 | 7,0 | < 400 |
| PES 10 | 34,9 | 21,6 | 7,5 | 7,5 | < 400 |
| PES 11 | 35,0 | 21,3 | 7,5 | 7,5 | < 400 |
| PES 12 | 36,4 | 22,9 | 6,5 | 6,5 | < 400 |
| PES 13 | 35,7 | 22,8 | 7,0 | 6,5 | < 400 |
| PES 14 | 34,6 | 21,2 | 7,5 | 7,5 | < 400 |

Tabelle 4: Eigenschaften der Phenolschäume

| **Schaumstabilisator** | **Dichte in kg/m³** | **λ in mW/mK** | **Zellstruktur Oberfläche** | **Zellstruktur Innenstörung** | **Emission D4+D5 in μg/m³** |
|---|---|---|---|---|---|
| TAGAT® CH 40 / PES 1 (2,5:2,0) | 36,7 | 22,9 | 6,0 | 6,0 | > 300 |
| TAGAT® CH 40 / PES 2 (2,5:2,0) | 36,8 | 23,1 | 6,5 | 6,5 | > 300 |
| TAGAT® CH 40 / PES 3 (2,5:2,0) | 35,3 | 22,2 | 7,0 | 7,5 | > 300 |
| TAGAT® CH 40 / PES 4 (2,5:2,0) | 34,8 | 22,0 | 7,0 | 7,0 | < 200 |
| TAGAT® CH 40 / PES 5 (2,5:2,0) | 35,2 | 22,3 | 7,0 | 7,0 | < 200 |
| TAGAT® CH 40 / PES 6 (2,5:2,0) | 35,0 | 22,2 | 7,5 | 6,5 | < 200 |
| TAGAT® CH 40 / PES 7 (2,5:2,0) | 34,6 | 21,6 | 7,0 | 7,0 | < 200 |
| TAGAT® CH 40 / PES 8 (2,5:2,0) | 35,5 | 22,0 | 6,5 | 6,5 | < 200 |
| TAGAT® CH 40 / PES 9 (2,5:2,0) | 34,2 | 21,8 | 7,5 | 7,5 | < 200 |
| TAGAT® CH 40 / PES 10 (2,5:2,0) | 34,5 | 21,9 | 8,0 | 7,5 | < 200 |

(fortgesetzt)

| **Schaumstabilisator** | **Dichte in kg/m$^3$** | **$\lambda$ in mW/mK** | **Zellstruktur Oberfläche** | **Zellstruktur Innenstörung** | **Emission D4+D5 in $\mu$g/m$^3$** |
|---|---|---|---|---|---|
| TAGAT® CH 40 / PES 11 (2,5:2,0) | 34,8 | 21,4 | 7,5 | 7,5 | < 200 |
| TAGAT® CH 40 / PES 12 (2,5:2,0) | 36,7 | 22,9 | 6,5 | 6,5 | < 200 |
| TAGAT® CH 40 / PES 13 (2,5:2,0) | 35,5 | 22,7 | 6,5 | 6,5 | < 200 |
| TAGAT® CH 40 / PES 14 (2,5:2,0) | 34,2 | 21,3 | 7,5 | 7,5 | < 200 |

Die Ergebnisse zeigen, dass mit allen erfindungsgemäßen Schaumstabilisatoren Schaumqualitäten erzielt werden können, die auf dem gleichen Niveau oder leicht über dem von nicht erfindungsgemäßen Schaumstabilisatoren liegen. Ebenso konnte gezeigt werden, dass mit allen erfindungsgemäßen Schaumstabilisatoren eine deutlich Verbesserung hinsichtlich der Emission von D4 und D5 erreicht werden konnte. Alle anderen für den Gebrauch relevanten Schaumeigenschaften werden durch die erfindungsgemäßen Schaumstabilisatoren nicht oder nur unwesentlich beeinflusst.

**Patentansprüche**

1. Zusammensetzung zur Herstellung von Phenolschaum, umfassend mindestens ein Phenolharz, mindestens ein Treibmittel, mindestens einen Katalysator sowie mindestens ein Polyethersiloxan nach Formel 1,

$$M_aM^1_bD_cD^1_d \quad \text{(Formel 1)}$$

mit

M =

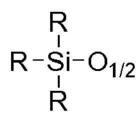

M1 =

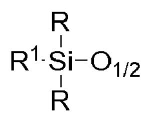

D =

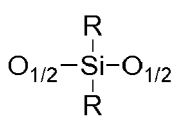

D1 =

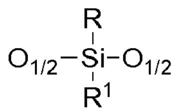

a = 0 bis 2,
b = 0 bis 2,
c = 0 bis 100, vorzugsweise 0 bis 75, besonders bevorzugt 0 bis 50,
d = 1 bis 100, vorzugsweise 1 bis 75, besonders bevorzugt 1 bis 50, wobei

$$a + b = 2,$$

$$a + b + c + d > 4, \text{ bevorzugt } > 7,$$

$$(a + b + c + d) / (b + d) < 5,$$

vorzugsweise 1 bis 4, besonders bevorzugt 1 bis 3,
R = jeweils unabhängig voneinander, gleiche oder verschiedene Alkylreste mit 1 bis 16 Kohlenstoffatomen, gleiche oder verschiedene Arylreste mit 6 bis 16 Kohlenstoff-atomen, H oder -O-$R^2$, bevorzugt Methyl, Ethyl, Phenyl oder H, insbesondere Methyl,
$R^2$ = jeweils unabhängig voneinander gleiche oder verschiedene Alkylreste mit 1 bis 16 Kohlenstoffatomen, gleiche oder verschiedene Arylreste mit 6 bis 16 Kohlenstoffatomen oder H,
$R^1$ = jeweils unabhängig voneinander gleiche oder verschiedene Alkylreste mit 6 bis 18 Kohlenstoffatomen oder gleiche oder verschiedene Polyether-Reste, bevorzugt gleiche oder verschiedene Alkylreste mit 6 bis 18 Kohlenstoffatomen oder gleiche oder verschiedene Polyether-Reste nach Formel 2,

$$-R^3-O-\left[CH_2CH_2O\right]_e-\left[CH_2CH(CH_3)O\right]_f-\left[CH(CH_3)CH_2O\right]_g-\left[CR^4{}_2CR^4{}_2O\right]_h-R^5 \quad \text{(Formel 2)}$$

$R^3$ = jeweils unabhängig voneinander gleiche oder verschiedene divalente Alkylreste mit 2 bis 15 Kohlenstoffatomen, bevorzugt gleiche oder verschiedene divalente Alkylreste mit 3 bis 6 Kohlenstoffatomen, insbesondere bevorzugt $-(CH_2)_3-$,
$R^4$ = jeweils unabhängig voneinander gleiche oder verschiedene Alkylreste mit 1 bis 18 Kohlenstoffatomen, die optional Etherfunktionen besitzen, oder gleiche oder verschiedene Arylreste mit 6 bis 18 Kohlenstoffatomen, die optional Etherfunktionen besitzen, oder H, bevorzugt H, Methyl, Ethyl oder Benzyl,
$R^5$ = jeweils unabhängig voneinander gleiche oder verschiedene Reste ausgewählt aus der Gruppe bestehend aus: $R^2$ und C(O)$R^2$, wobei Methyl, Butyl, H oder C(O)Me bevorzugt sind,
e = 0 bis 100, bevorzugt 0 bis 80, insbesondere 0 bis 60,
f = 0 bis 100, bevorzugt 0 bis 80, insbesondere 0 bis 60,
g = 0 bis 100, bevorzugt 0 bis 80, insbesondere 0 bis 60,
h= 0 bis 100, bevorzugt 0 bis 60, besonders bevorzugt 0,
wobei mindestens einer der Werte e, f, g oder h > 0 ist,
wobei höchstens 50% der Reste $R^1$ in einem Polyethersiloxan nach Formel 1, jeweils unabhängig voneinander gleiche oder verschiedene Alkylreste mit 6 bis 18 Kohlenstoffatomen sind
und wobei das mindestens eine Polyethersiloxan nach Formel 1 in einer Gesamtmenge von 0,1 bis 20 Gewichtsteile, vorzugsweise 0,5 bis 10 Gewichtsteile, besonders bevorzugt 0,5 bis 8 Gewichtsteile bezogen auf 100 Gewichtsteile des gesamt eingesetzten Phenolharzes, enthalten ist.

2. Zusammensetzung nach Anspruch 1, **dadurch gekennzeichnet, dass** das mindestens eine Polyethersiloxan nach Formel 1 sich dadurch auszeichnet, dass es für $R^1$ mindestens einen Polyether-Rest der allgemeinen Formel 2 enthält, mit

e = 6 bis 16,

f = g = h = 0
oder

$$e + f + g = 8 \text{ bis } 50,$$

h = 0,

$$(f + g) / (e + f + g) > 0 \text{ bis } 0{,}9,$$

besonders bevorzugt 0,1 bis 0,6.

**3.** Zusammensetzung nach Anspruch 1, **dadurch gekennzeichnet, dass** das mindestens eine Polyethersiloxan nach Formel 1 sich dadurch auszeichnet, dass es für $R^1$ mindestens zwei verschiedene Polyether-Reste der allgemeinen Formel 2 enthält, wobei mindestens ein Polyether der Kategorie 1 und mindestens ein Polyether der Kategorie 2 entspricht, mit

a = 0 bis 2, besonders bevorzugt 2
b = 0 bis 2, besonders bevorzugt 0,
c = 0 bis 10, bevorzugt 0 bis 5, besonders bevorzugt 0
d = 1 bis 80, vorzugsweise 1 bis 50, besonders bevorzugt 5 bis 40,
wobei

$$a + b = 2,$$

$$a + b + c + d > 4, \text{ bevorzugt } > 7$$

und
Kategorie 1:

$$e + f + g = 10 \text{ bis } 60,$$

besonders bevorzugt 14 bis 40,
h = 0,

$$(f + g) / (e + f + g) \geq 0{,}6,$$

besonders bevorzugt ≥ 0,8, insbesondere gleich 1, und
Kategorie 2:

e = 6 bis 16,
f = g = h = 0,

oder

$$e + f + g = 8 \text{ bis } 50,$$

h = 0,

$$(f + g) / (e + f + g) > 0 \text{ bis } 0{,}5,$$

besonders bevorzugt 0,1 bis 0,3
und das bevorzugte Verhältnis aus Polyethern der Kategorie 1 und Polyethern der Kategorie 2 im betreffenden Polyethersiloxan 10:90 bis 90:10 Gew.-%, besonders bevorzugt 20:80 bis 80:20 Gew.-%, insbesondere 25:75 bis 75:25 Gew.-% entspricht.

**4.** Zusammensetzung nach einem der Ansprüche 1 bis 3, **dadurch gekennzeichnet, dass** das mindestens eine Polyethersiloxan nach Formel 1 sich dadurch auszeichnet, dass es mindestens zwei verschiedene Reste $R^1$ enthält, wobei mindestens ein Rest $R^1$ ein Polyether-Rest nach Formel 2 und ein Rest $R^1$ ein Alkylrest mit 6 bis 18 Kohlenstoffatomen ist, wobei höchstens 50% der Reste $R^1$ in einem Polyethersiloxan nach Formel 1, Alkylreste mit 6 bis 18 Kohlenstoffatomen sind.

**5.** Zusammensetzung nach einem der Ansprüche 1 bis 4, **dadurch gekennzeichnet, dass** das mindestens eine Treibmittel ausgewählt ist aus der Gruppe bestehend aus

- Kohlenwasserstoffen mit 3, 4 oder 5 Kohlenstoff-Atomen, bevorzugt cyclo-, iso- und/oder n-Pentan
und
- halogenierten Kohlenwasserstoffen mit 3, 4 oder 5 Kohlenstoff-Atomen, bevorzugt Isopropylchlorid, Hydrofluoroolefine und/oder Hydrohaloolefine, bevorzugt 1234ze, 1234yf, 1224yd, 1233zd(E) und/oder 1336mzz.

**6.** Zusammensetzung nach einem der Ansprüche 1 bis 5, **dadurch gekennzeichnet, dass** zusätzlich mindestens ein siliziumfreies Tensid in einer Gesamtmenge von 0,1 bis 15 Gewichtsteile, vorzugsweise 1 bis 10 Gewichtsteile, bezogen auf 100 Gewichtsteile des gesamt eingesetzten Phenolharzes, enthalten ist.

**7.** Zusammensetzung nach einem der Ansprüche 1 bis 6, **dadurch gekennzeichnet, dass** zusätzlich mindestens ein alkoxyliertes, bevorzugt ethoxyliertes, Pflanzenöl, bevorzugt Rizinusöl in einer Gesamtmenge von 0,1 bis 15 Gewichtsteile, vorzugsweise 1 bis 10 Gewichtsteile, bezogen auf 100 Gewichtsteile des gesamt eingesetzten Phenolharzes, enthalten ist.

**8.** Zusammensetzung nach einem der Ansprüche 1 bis 7, **dadurch gekennzeichnet, dass** der mindestens eine Katalysator ausgewählt ist aus der Gruppe bestehend aus organischen und anorganischen Säuren, vorzugsweise ist der mindestens eine Katalysator ausgewählt aus der Gruppe bestehend aus Schwefelsäure, Phosphorsäure, Benzolsulfonsäure, Xylolsulfonsäure, para-Toluolsulfonsäure, Ethylbenzolsulfonsäure, Naphtolsulfonsäure, Cumolsulfonsäure und Phenolsulfonsäure.

**9.** Zusammensetzung nach einem der Ansprüche 1 bis 8, **dadurch gekennzeichnet, dass** der mindestens eine Katalysator in einer Gesamtmenge von 1 bis 30 Gewichtsteile, vorzugsweise 1 bis 25 Gewichtsteile, besonders bevorzugt 3 bis 20 Gewichtsteile, bezogen auf 100 Gewichtsteile des gesamt eingesetzten Phenolharzes, enthalten ist.

**10.** Zusammensetzung nach einem der Ansprüche 1 bis 9, **dadurch gekennzeichnet, dass** das mindestens eine Phenolharz einen Wassergehalt von 1 bis 25 Gew.-%, bevorzugt 4 bis 19 Gew.-%, bezogen auf das gesamt eingesetzte Phenolharz, aufweist.

**11.** Verfahren zur Herstellung von Phenolschaum, **dadurch gekennzeichnet, dass** es unter Einsatz einer Reaktionsmischung, enthaltend eine Zusammensetzung wie in einem der Ansprüche 1 bis 10 definiert, erfolgt.

**12.** Phenolschaum hergestellt gemäß dem Verfahren nach Anspruch 11.

**13.** Phenolschaum nach Anspruch 12, **dadurch gekennzeichnet, dass** der Phenolschaum eine Dichte nach ASTM D1622-20 von 5 bis 500 $kg/m^3$, bevorzugt 10 bis 200 $kg/m^3$, insbesondere bevorzugt von 12 bis 100 $kg/m^3$ aufweist.

**14.** Verwendung des Phenolschaums nach einem der Ansprüche 12 bis 13 zur thermischen Isolation.

Europäisches Patentamt
European Patent Office
Office européen des brevets

# EUROPÄISCHER RECHERCHENBERICHT

Nummer der Anmeldung
EP 24 17 4761

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 7 016687 B2 (SEKISUI CHEMICAL CO LTD) 7. Februar 2022 (2022-02-07) * Vergleichsbeispiel 2; Absatz [0081] * | 1-5,8,9, 11-14 | INV. C08J9/00 C08J9/06 C08J9/14 |
| X | CN 107 586 435 A (INST CHEMICAL IND FOREST PRODUCTS CAF) 16. Januar 2018 (2018-01-16) * Anspruch 1; Beispiel 3 * | 1-6,8,9, 11,12,14 | |
| X,D | WO 2004/056911 A2 (KINGSPAN HOLDINGS IRL LTD [IE]; EDGERLEY GRAHAM MORGAN [GB] ET AL.) 8. Juli 2004 (2004-07-08) * Seite 7; Beispiele 1 (A-D) * | 1-5,8,9, 11-14 | |
| X,D | WO 2022/043561 A1 (KINGSPAN HOLDINGS IRL LTD [IE]) 3. März 2022 (2022-03-03) * Absatz [0125]; Beispiele 1-16; Tabellen 3-4 * | 1-14 | |

RECHERCHIERTE SACHGEBIETE (IPC)

B29C
C08J

Der vorliegende Recherchenbericht wurde für alle Patentansprüche erstellt

1

| Recherchenort | Abschlußdatum der Recherche | Prüfer |
|---|---|---|
| Den Haag | 1. Oktober 2024 | Jegou, Gwénaëlle |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 24 17 4761

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-10-2024

| Im Recherchenbericht angeführtes Patentdokument | Datum der Veröffentlichung | Mitglied(er) der Patentfamilie | Datum der Veröffentlichung |
|---|---|---|---|
| JP 7016687 B2 | 07-02-2022 | JP 7016687 B2 | 07-02-2022 |
| | | JP 2018095868 A | 21-06-2018 |
| CN 107586435 A | 16-01-2018 | KEINE | |
| WO 2004056911 A2 | 08-07-2004 | AU 2003288485 A1 | 14-07-2004 |
| | | EP 1572790 A2 | 14-09-2005 |
| | | GB 2398570 A | 25-08-2004 |
| | | IE 20030957 A1 | 30-06-2004 |
| | | WO 2004056911 A2 | 08-07-2004 |
| WO 2022043561 A1 | 03-03-2022 | AU 2021331534 A1 | 16-02-2023 |
| | | CA 3186889 A1 | 03-03-2022 |
| | | EP 4172255 A1 | 03-05-2023 |
| | | GB 2598566 A | 09-03-2022 |
| | | JP 2023538737 A | 11-09-2023 |
| | | US 2023312854 A1 | 05-10-2023 |
| | | WO 2022043561 A1 | 03-03-2022 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 3830174 A1
- DE 602004006376 T2
- EP 2898005 A1
- EP 1922357 A1
- WO 2022043561 A1
- EP 4073155 A1
- AU 2021238847 A1
- WO 2006114777 A1
- WO 2004056911 A2
- EP 0170357 B1
- EP 0170357 A1
- US 4444912 A


### In der Beschreibung aufgeführte Nicht-Patentliteratur


- *CHEMICAL ABSTRACTS,* 68478-92-2